# EUROPEAN PATENT SPECIFICATION

(11) **EP 4 003 753 B1**
(45) Date of publication and mention of the grant of the patent: **30.08.2023**
(21) Application number: 20746702.8
(22) Date of filing: 29.06.2020
(51) Int. Cl.: B60B 19/00

(54) **A SET OF A WHEEL AND A FRAME PART FOR A BICYCLE, AND A BICYCLE COMPRISING SUCH SET**
SATZ VON RAD UND FAHRGESTELL FÜR FAHRRAD, AND FAHRRAD EINSCHLIESSEND EINES SOLCHEN SATZES
ENSEMBLE D'UNE ROUE ET CHASSIS POUR VÉLO, ET VÉLO COMPRENANT UN TEL ENSEMBLE

(30) Priority: 26.07.2019 PT 2019115675
(43) Date of publication of application: 01.06.2022
(73) Proprietor: Polisport Plásticos, SA, 3720-024 Carregosa (PT)
(72) Inventor: PINTO OLIVEIRA ARAÚJO, Pedro Jorge, 3720-024 Carregosa (PT); PEREIRA PINTO, Miguel Filipe, 3720-024 Carregosa (PT)
(74) Representative: do Nascimento Gomes, Rui
(86) International application number: PCT/IB2020/056124
(87) International publication number: WO 2021/019323

(56) References cited:
- EP-A2- 1 637 444
- CN-A- 104 443 240
- CN-A- 104 670 374
- CN-A- 105 857 470
- CN-U- 204 368 392
- DE-A1- 19 548 327
- US-A- 3 329 444
- US-A- 4 045 096
- US-A- 5 490 719
- US-A- 6 109 638
- US-A1- 2007 143 958

## Description

### FIELD OF THE INVENTION

The present invention is enclosed in the area of bicycles, in particular bicycles with hubless wheels.

### PRIOR ART

Common bicycle wheels have a hub or centred axle to which a rim and a tyre are connected by means of spokes. However, such solution typically leads to a reduction of safety for the cyclist, which may get hurt when touching a rotating wheel, in particular by being hit by the spokes of such wheel.

Other solutions exist in the art, such as the case of patent application US6050584, which discloses a bicycle with a hubless wheel. Although not having the referred safety issue present in wheels with hub, it maintains the complex structure of the common wheels.

US 5 490 719 consists of a prior art hubless wheel solution which, yet, fails to disclose a robust solution for vehicles.

CN 105 857 470 consists of a more classical prior art wheel, involving a foldable "wheel with a hub" solution.

The present solution innovatively overcomes such issues.

### SUMMARY OF THE INVENTION

It is therefore an object of the present invention a set of a wheel and a frame part, both suitable for a bicycle, according to claim 1. The frame part comprises a first longitudinal part and a second longitudinal part, and the at least one wheel comprises:
- a central ring in turn comprising a plurality of bearings,
- a rim, arranged around and rotatable in relation to said central ring, being rotatable by means of said plurality of bearings, and
- a bicycle tyre, which is connectable to and rotates jointly with the rim,
wherein the first longitudinal part is suitable to be coupled to a first side of the central ring of the wheel and the second longitudinal part is suitable to be coupled to a second side of the central ring of the wheel, the first and second sides being opposite to one another. Such consists of a simple and effective solution to provide a hubless wheel structure, which requires only two longitudinal parts of the frame part coupling to the central ring. The central ring comprises bearings and thereby provides for the rotation of the rim and tyre ensemble in relation to the central ring and to the frame part.

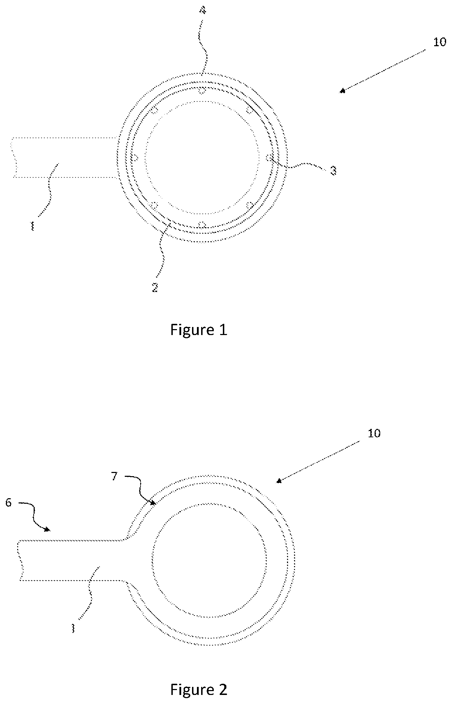

In the simple and effective construction of the set of the present invention, each of the first and second longitudinal parts comprises an elongated portion and a wheel coupling portion - which are depicted in the examples of Figures 1-5 -, wherein i) the wheel coupling portion provides for the coupling to the side of the central ring and ii) an opening is provided between the elongated portion and the coupling portion, the wheel passing and rotating through such opening. Advantageously, and reinforcing such simple construction, the first longitudinal portion consists of a single piece, and the second longitudinal portion consists of a single piece.

It is also an object of the present invention a bicycle comprising the set of the present invention, as of any of the described embodiments of the set. Such consists of a safe and yet simple construction bicycle. Preferably, the bicycle comprises two sets according to the present invention, the two sets being coupled to each other and rotatable with regard to one another, and wherein a steering wheel is coupled to the elongated portion of one of the sets which consists of a first set. In addition, the bicycle may further comprise a seat, the seat being provided in the elongated portion of a second set which does not comprise said steering wheel.

### DESCRIPTION OF FIGURES

Figure 1- representation of an embodiment of the set of a wheel and a frame part (1) (both suitable for a bicycle) of the present invention (partial representation), in which the frame part (1) is highlighted, as well as the elements of the wheel, including the tyre (4), the central ring in turn comprising a plurality of bearings (3) and the rim (2) in between. The rim (2), by being rigid, provides for the non-deformation of the ensemble tyre (4) and rim (2). The rim (2) and tyre (4) thereby rotate in relation to the central ring and the frame part (1). The frame part (1) is coupled to the central ring, therefore being fixed to each other. In Figure 1, only a longitudinal part is represented. The representation of Fig. 1 may therefore correspond to the first embodiment as described below, comprising no pedals or pedal axle (5).
Figure 2 - representation of the same embodiment as of Figure 1, in the present case both longitudinal parts coupling to the central ring. The elongated portion (6) and the wheel coupling portion (7) of the frame part (1) are represented.

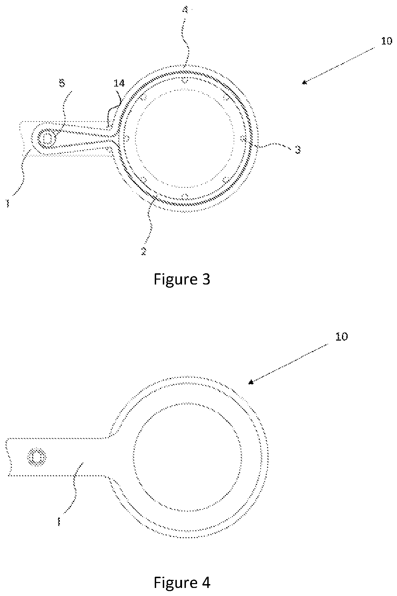

Figure 3 - representation of another embodiment of the set of a wheel and a frame part (1) (both suitable for a bicycle) of the present invention (partial representation). This representation of Fig. 3 may therefore correspond to the second embodiment as described below, comprising pedals and a pedal axle (5), as well as a tyre (4) which consists of a timing belt. The timing belt envelops both the rim (2) and the pedal axle (5), thereby providing for the movement of the wheel and rim (2) in relation to the central ring and frame part (1). The rotation imposed by the pedal axle (5), by means of the pedals (not represented) is transmitted to the tyre (4) which rotates in relation to the central ring by means of the bearings (3), and thereby provides for the movement of the tyre (4) over the ground.
Figure 4 - representation of the same embodiment as of Figure 3, in the present case both longitudinal parts coupling to the central ring. The elongated portion (6) and the wheel coupling portion (7) of the frame part (1) are represented.

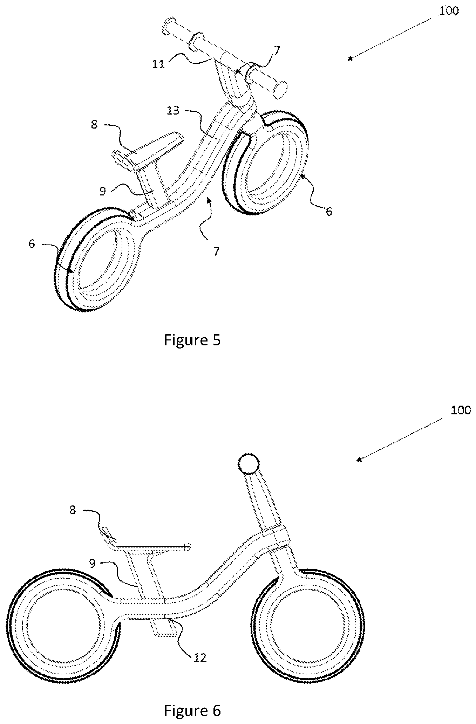

Figure 5 - perspective view of representation of an embodiment of a bicycle (100) comprising two sets according to the present invention. The elongated and wheel coupling portions (6, 7) of the two sets are represented, as well as a seat (8) and a steering wheel (11). The seat (8) is coupled to one of the sets, and the steering wheel (11) is coupled to the other set. The set to which the seat (8) is coupled comprises a core portion (13). The seat (8) also comprises an elongated coupling portion (9) and the core portion (13) has an opening (partially shown) suitable for coupling to the elongated coupling portion (9).
Figure 6 - side view of representation of the embodiment of a bicycle (100) of Figure 5. The elongated coupling portion (9) of the seat (8) is connected to the core portion (13) by means of the opening (shown) suitable for coupling to the elongated coupling portion (9). The seat (8) may therefore be fixed at different distances from the elongated portion (6).

### DETAILED DESCRIPTION

The more general and advantageous configurations of the present invention are described in the Summary of the invention. Such configurations are detailed below in accordance with other advantageous and/or preferred embodiments of implementation of the present invention.

In another inventive aspect of the present invention, the frame part (1) comprises a core portion (13), the core portion (13) coupling the elongated portions (6) of the first and second longitudinal parts, and the core being so arranged that it provides for the opening between the elongated portions (6) and the wheel coupling portions (7), preferably by having a length lesser than the length of the elongated portions (6). This configuration is clearly shown in Figures 1-4. The core portion (13) consists of an additional element which provides for the integrity and robustness of the set (10) of the present invention, while maintaining the safe structure which separates the user from rotating elements.

In another advantageous embodiment of the set (10) of the present invention, combinable with any above described, the wheel coupling portions (7) have substantially a ring shape, having the shape of a ring except in a connection with the elongated portion (6) and, when the wheel coupling portions (7) are coupled to the central ring, a hole is formed within the wheel. Such configuration - which is represented in the figures - provides that the longitudinal portions [in particular their wheel coupling portions (7)] couple robustly to the central ring. In a preferred and advantageous embodiment, each coupling portion has i) an inner radius which is equal or lower than an inner radius of the central ring of the wheel and an ii) an outer radius which is lesser than the radius of the tyre (4), such that the tyre (4) protrudes from the wheel coupling portions (7) and thereby, when in action, contacts the ground. Thus, not only the frame part (1) couples robustly to the wheel as it also couples to no more than the wheel, maintaining the functionality of the structure in a simple construction.

Preferably, the plurality of bearings (3) is equally spaced around the central ring, preferably consisting of six to twelve bearings (3).. Such provides for an even rotation of the rim (2) and tyre (4) with regard to the central ring. For instance, the embodiments represented in Figures 1 and 3 (as well as Figures 2 and 4, even though not shown) contain eight equally spaced bearings (3).

In another preferred embodiment, the rim (2) is rigid, thereby providing for the non-deformation of the ensemble tyre (4) and rim (2).

In a first embodiment of the set (10) of the present invention, which is depicted in Figures 1 and 2, the frame part (1) comprises no pedals. A bicycle (100) comprising such set (10) is therefore motioned directly by the feet of the user in contact of the ground.

In a second embodiment of the set (10) of the present invention, which is depicted in Figures 3 and 4, the frame part (1) comprises a pedal axle (5) and pedals coupled to the pedal axle (5), the pedal axle (5) being parallel to the bearings (3), and the tyre (4) consists of a timing belt, the timing belt tyre (4) being arranged such that it envelops the rim (2) and the pedal axle (5), such that the movement of the pedals is transmitted to the timing belt tyre (4). Thus, by consisting of a timing belt and therefore being flexible, the timing belt tyre (4) is able to be arranged around the rim (2) and the pedal axle (5), and thereby provide for a solution which - in a very simple and yet effective way - combines a hubless wheel with a pedal bicycle (100).

In an inventive aspect according of the second embodiment, the frame part (1) may further comprise two routing axles (14), the routing axles (14) being parallel to the pedal axle (5) and being provided between the elongated portions (6) of the first and second longitudinal parts, such that the timing belt tyre (4) is routed from enveloping the rim (2) to enveloping the pedal axle (5). Such provides for an efficient way to embed the timing belt between the rim (2) and the pedal axle (5). In particular, and as of Figures 3 and 4, the elongated portions (6) of the first and second elongated parts cover entirely such section of the timing belt wheel.

It also consists of an invention a hubless wheel comprising a central ring in turn comprising a plurality of bearings (3), a rim (2), arranged around and rotatable in relation to said central ring, being rotatable by means of said plurality of bearings (3), and a bicycle tyre (4), which is connectable to and rotates jointly with the rim (2), wherein the bicycle tyre (4) consists of a timing belt. Such bicycle tyre (4) could be included in the set (10) of the present invention and/or in the bicycle (100) of the present invention, by being combined with the referred frame part (1) which comprises a pedal axle (5) and pedals coupled to the pedal axle (5), the pedal axle (5) being parallel to the bearings (3), in such case the tyre (4) being arranged such that it envelops the rim (2) and the pedal axle (5), such that the movement of the pedals is transmitted to the tyre (4).

In an embodiment of the bicycle (100) of the present invention, the set (10) comprising the steering wheel (11) consists of a front portion of the bicycle (100) and set (10) the comprising the seat (8) consists of a back portion of the bicycle (100) (case of Figures 4 and 5), the front portion of the bicycle (100) consisting of a set (10) which does not comprise a timing belt tyre (4). Preferably, the seat (8) comprises an elongated coupling portion (9) and the core portion (13) has an opening suitable for coupling (12) to the elongated coupling portion (9), the elongated coupling portion (9) and the opening of the core portion (13) being such that the seat (8) is able to be fixed at different distances from the elongated portion (6).

As will be clear to one skilled in the art, the present invention should not be limited to the embodiments described herein, and a number of changes are possible which remain within the scope of the present invention.

## Claims

1. A set (10) of a wheel and a frame part (1), both suitable for a bicycle (100), wherein the frame part (1) comprises a first longitudinal part and a second longitudinal part, and the at least one wheel comprises:
- a central ring in turn comprising a plurality of bearings (3),
- a rim (2), arranged around and rotatable in relation to said central ring, being rotatable by means of said plurality of bearings (3), and
- a bicycle tyre (4), which is connectable to and rotates jointly with the rim (2),
wherein the first longitudinal part is suitable to be coupled to a first side of the central ring of the wheel and the second longitudinal part is suitable to be coupled to a second side of the central ring of the wheel, the first and second sides being opposite to one another,
and **characterised in that**
each of the first and second longitudinal parts comprises an elongated portion (6) and a wheel coupling portion (7), wherein i) the wheel coupling portion (7) provides for the coupling to the side of the central ring and ii) an opening is provided between the elongated portion (6) and the coupling portion, the wheel passing and rotating through such opening.

2. A set (10) according to the previous claim wherein the first longitudinal portion consists of a single piece, and the second longitudinal portion consists of a single piece.

3. A set (10) according to any of the previous claims wherein the frame part (1) comprises a core portion (13), the core portion (13) coupling the elongated portions (6) of the first and second longitudinal parts, and the core being so arranged that it provides for the opening between the elongated portions (6) and the wheel coupling portions (7), preferably by having a length lesser than the length of the elongated portions (6).

4. A set (10) according to any of the claims 2-3 wherein the wheel coupling portions (7) have substantially a ring shape, having the shape of the ring except in a connection with the elongated portion (6) and, when the wheel coupling portions (7) are coupled to the central ring, a hole is formed within the wheel.

5. A set (10) according to the previous claim wherein each coupling portion having i) an inner radius which is equal or lower than an inner radius of the central ring of the wheel and an ii) an outer radius which is lesser than the radius of the tyre (4), such that the tyre (4) protrudes from the wheel coupling portions (7) and thereby, when in action, contacts the ground.

6. A set (10) according to any of the preceding claims wherein the plurality of bearings (3) is equally spaced around the central ring, preferably consisting of six to twelve bearings (3).

7. A set (10) according to any of the preceding claims wherein the rim (2) is rigid, thereby providing for the non-deformation of the ensemble tyre (4) and rim (2).

8. A set (10) according to any of the preceding claims wherein the frame part (1) comprises a pedal axle (5) and pedals coupled to the pedal axle (5), the pedal axle (5) being parallel to the bearings (3), and the tyre (4) consists of a timing belt, the timing belt tyre (4) being arranged such that it envelops the rim (2) and the pedal axle (5), such that the movement of the pedals is transmitted to the timing belt tyre (4).

9. A set (10) according to the previous claim wherein the frame part (1) further comprises two routing axles (14), the routing axles (14) being parallel to the pedal axle (5) and being provided between the elongated portions (6) of the first and second longitudinal parts, such that the timing belt tyre (4) is routed from enveloping the rim (2) to enveloping the pedal axle (5).

10. A bicycle (100) comprising a set (10) according to any of the preceding claims.

11. A bicycle (100) according to the previous claim wherein it comprises two sets (10) according to any of the claims 1-9, the two sets (10) being coupled to each other and rotatable with regard to one another, and wherein a steering wheel (11) is coupled to the elongated portion (6) of one of the sets (10) which consists of a first set (10).

12. A bicycle (100) according to the previous claim wherein it further comprises a seat (8), the seat (8) being provided in the elongated portion (6) of a second set (10) which does not comprise said steering wheel (11).

13. A bicycle (100) according to any of the claims 11-12 wherein the set (10) comprising the steering wheel (11) consists of a front portion of the bicycle (100) and set (10) the comprising the seat (8) consists of a back portion of the bicycle (100), the front portion of the bicycle (100) consisting of a set (10) according to any of the claims 1-8.

14. A bicycle (100) according to any of the claims 12-13 and comprising a set (10) according to claim 4 and any of the claims 5-10 wherein the seat (8) comprises an elongated coupling portion (9) and the core portion (13) has an opening suitable for coupling (12) to the elongated coupling portion (9), the elongated coupling portion (9) and the opening of the core portion (13) being such that the seat (8) is able to be fixed at different distances from the elongated portion (6).

## Patentansprüche

1. Satz (10) aus einem Rad und einem Rahmenteil (1), die beide für ein Fahrrad (100) geeignet sind, **wobei** das Rahmenteil (1) einen ersten Längsteil und einen zweiten Längsteil umfasst und das mindestens eine Rad umfasst:
- einen zentralen Ring, der seinerseits eine Vielzahl von Lagern (3) umfasst,
- eine Felge (2), die um den zentralen Ring herum angeordnet und relativ dazu drehbar ist, wobei sie mittels der Vielzahl von Lagern (3) drehbar ist, und
- einen Fahrradreifen (4), der mit der Felge (2) verbunden werden kann und sich gemeinsam mit ihr dreht,
wobei der erste Längsteil geeignet ist, mit einer ersten Seite des zentralen Rings des Rades gekoppelt zu werden, und der zweite Längsteil geeignet ist, mit einer zweiten Seite des zentralen Rings des Rades gekoppelt zu werden, wobei die erste und die zweite Seite einander gegenüberliegen,
und **dadurch gekennzeichnet, dass** jedes der ersten und zweiten Längsteile einen länglichen Abschnitt (6) und einen Radkupplungsabschnitt (7) umfasst, wobei i) der Radkupplungsabschnitt (7) für die Kupplung an der Seite des zentralen Rings sorgt und ii) eine Öffnung zwischen dem länglichen Abschnitt (6) und dem Kupplungsabschnitt vorgesehen ist, wobei das Rad durch diese Öffnung hindurchgeht und sich dreht.

2. Satz (10) nach dem vorhergehenden Anspruch, wobei der erste Längsabschnitt aus einem einzigen Stück besteht und der zweite Längsabschnitt aus einem einzigen Stück besteht.

3. Satz (10) nach einem der vorhergehenden Ansprüche, wobei das Rahmenteil (1) einen Kernabschnitt (13) umfasst, wobei der Kernabschnitt (13) die länglichen Abschnitte (6) des ersten und zweiten Längsteils koppelt und der Kern so angeordnet ist, dass er für die Öffnung zwischen den länglichen Abschnitten (6) und den Radkupplungsabschnitten (7) sorgt, vorzugsweise indem er eine geringere Länge als die Länge der länglichen Abschnitte (6) aufweist.

4. Satz (10) nach einem der Ansprüche 2-3, wobei die Radkupplungsabschnitte (7) im Wesentlichen eine Ringform haben, die die Form des Rings hat, außer in einer Verbindung mit dem länglichen Abschnitt (6), und wobei, wenn die Radkupplungsabschnitte (7) mit dem zentralen Ring gekoppelt sind, ein Loch in dem Rad gebildet wird.

5. Satz (10) nach dem vorhergehenden Anspruch, wobei jeder Kupplungsabschnitt i) einen inneren Radius, der gleich oder kleiner als ein innerer Radius des zentralen Rings des Rades ist, und ii) einen äußeren Radius, der kleiner als der Radius des Reifens (4) ist, aufweist, so dass der Reifen (4) aus den Radkupplungsabschnitten (7) herausragt und dadurch, wenn er in Aktion ist, den Boden berührt.

6. Satz (10) nach einem der vorhergehenden Ansprüche, wobei der Vielzahl von Lagern (3) gleichmäßig um den zentralen Ring verteilt ist und vorzugsweise aus sechs bis zwölf Lagern (3) besteht.

7. Satz (10) nach einem der vorangehenden Ansprüche, wobei die Felge (2) starr ist, so dass sich das Ensemble aus Reifen (4) und Felge (2) nicht verformt.

8. Satz (10) nach einem der vorhergehenden Ansprüche, wobei das Rahmenteil (1) eine Pedalachse (5) und mit der Pedalachse (5) gekoppelte Pedale umfasst, wobei die Pedalachse (5) parallel zu den Lagern (3) verläuft, und der Reifen (4) aus einem Zahnriemen besteht, wobei der Zahnriemenreifen (4) so angeordnet ist, dass er die Felge (2) und die Pedalachse (5) umschließt, so dass die Bewegung der Pedale auf den Zahnriemenreifen (4) übertragen wird.

9. Satz (10) nach dem vorhergehenden Anspruch, wobei das Rahmenteil (1) ferner zwei Routingachsen (14) umfasst, wobei die Routingachsen (14) parallel zur Pedalachse (5) verlaufen und zwischen den länglichen Abschnitten (6) des ersten und zweiten Längsteils vorgesehen sind, so dass der Zahnriemenreifen (4) von der Umhüllung der Felge (2) zur Umhüllung der Pedalachse (5) geführt wird.

10. Fahrrad (100) mit einem Satz (10) nach einem der vorhergehenden Ansprüche.

11. Fahrrad (100) nach dem vorhergehenden Anspruch, wobei es zwei Sätze (10) nach einem der Ansprüche 1-9 umfasst, wobei die beiden Sätze (10) miteinander gekoppelt und in Bezug zueinander drehbar sind, und wobei ein Lenkrad (11) mit dem länglichen Abschnitt (6) eines der Sätze (10) gekoppelt ist, der aus einem ersten Satz (10) besteht.

12. Fahrrad (100) nach dem vorhergehenden Anspruch, wobei es ferner einen Sitz (8) umfasst, wobei der Sitz (8) in dem länglichen Abschnitt (6) eines zweiten Satzes (10) vorgesehen ist, der das Lenkrad (11) nicht umfasst.

13. Fahrrad (100) nach einem der Ansprüche 11-12, wobei der Satz (10) mit dem Lenkrad (11) aus einem vorderen Teil des Fahrrads (100) besteht und der Satz (10) mit dem Sitz (8) aus einem hinteren Teil des Fahrrads (100) besteht, wobei der vordere Teil des Fahrrads (100) aus einem Satz (10) nach einem der Ansprüche 1-8 besteht.

14. Fahrrad (100) nach einem der Ansprüche 12-13 und mit einem Satz (10) nach Anspruch 4 und einem der Ansprüche 5-10, wobei der Sitz (8) einen länglichen Kupplungsabschnitt (9) umfasst und der Kernabschnitt (13) eine Öffnung hat, die zum Kupplung (12) mit dem länglichen Kupplungsabschnitt (9) geeignet ist, wobei der längliche Kupplungsabschnitt (9) und die Öffnung des Kernabschnitts (13) so beschaffen sind, dass der Sitz (8) in unterschiedlichen Abständen von dem länglichen Abschnitt (6) befestigt werden kann.

## Revendications

1. Ensemble (10) constitué d'une roue et d'une partie de cadre (1), toutes deux appropriées pour une bicyclette (100), dans lequel la partie de cadre (1) comprend une première partie longitudinale et une deuxième partie longitudinale, et la au moins une roue comprend :
- un anneau central comprenant à son tour une pluralité de roulements (3),
- une jante (2), disposée au tour dudit anneau central et rotative par rapport à celui-ci, pouvant tourner au moyen de ladite pluralité de roulements (3), et
- un pneumatique de bicyclette (4), qui peut être relié à la jante (2) et tourne conjointement avec celle-ci,
où la première partie longitudinale est adaptée pour être couplée à un premier côté de l'anneau central de la roue et la deuxième partie longitudinale est adaptée pour être couplée à un deuxième côté de l'anneau central de la roue, les premier et deuxième côtés étant opposés l'un à l'autre,
et **caractérisé en ce que** chacune des première et deuxième parties longitudinales comprend une partie allongée (6) et une partie de couplage de roue (7), où i) la partie de couplage de roue (7) permet le couplage au côté de l'anneau central et ii) une ouverture est prévue entre la partie allongée (6) et la partie de couplage, la roue passant et tournant à travers cette ouverture.

2. Ensemble (10) selon la revendication précédente, où la première partie longitudinale consiste en une seule pièce et la deuxième partie longitudinale consiste en une seule pièce.

3. Ensemble (10) selon l'une quelconque des revendications précédentes, où la partie de cadre (1) comprend une partie noyau (13), la partie noyau (13) reliant les parties allongées (6) des première et deuxième parties longitudinales, et le noyau étant disposé de manière à assurer l'ouverture entre les parties allongées (6) et les parties de couplage de roue (7), de préférence en ayant une longueur inférieure à la longueur des parties allongées (6).

4. Ensemble (10) selon l'une quelconque des revendications 2 et 3, où les parties de couplage de roue (7) présentent sensiblement une forme annulaire, ayant la forme d'un anneau sauf dans une connexion avec la partie allongée (6) et, lorsque les parties de couplage de roue (7) sont couplées à l'anneau central, un trou est formé à l'intérieur de la roue.

5. Ensemble (10) selon la revendication précédente, où chaque partie de couplage présente i) un rayon intérieur qui est égal ou inférieur à un rayon intérieur de l'anneau central de la roue et ii) un rayon extérieur qui est inférieur au rayon du pneumatique (4), de sorte que le pneumatique (4) fait saillie des parties de couplage de roue (7) et, par conséquent, lorsqu'il est en action, entre en contact avec le sol.

6. Ensemble (10) selon l'une quelconque des revendications précédentes, où la pluralité de roulements (3) est espacée de manière égale autour de l'anneau central et consiste de préférence en six à douze roulements (3).

7. Ensemble (10) selon l'une quelconque des revendications précédentes, où la jante (2) est rigide, ce qui assure la non-déformation de l'ensemble pneumatique (4) et jante (2).

8. Ensemble (10) selon l'une quelconque des revendications précédentes, où la partie de cadre (1) comprend un axe de pédale (5) et des pédales couplées à l'axe de pédale (5), l'axe de pédale (5) étant parallèle aux roulements (3), et le pneumatique (4) est constitué d'une ceinture, le pneumatique à ceinture (4) étant disposé de manière à envelopper la jante (2) et l'axe de pédale (5), de sorte que le mouvement des pédales est transmis au pneumatique à ceinture (4).

9. Ensemble (10) selon la revendication précédente, où la partie de cadre (1) comprend en outre deux axes d'acheminement (14), les axes d'acheminement (14) étant parallèles à l'axe de pédale (5) et étant disposés entre les parties allongées (6) des première et deuxième parties longitudinales, de sorte que le pneumatique à ceinture (4) est acheminé de l'enveloppement de la jante (2) à l'enveloppement de l'axe de pédale (5).

10. Bicyclette (100) comprenant un ensemble (10) selon l'une quelconque des revendications précédentes.

11. Bicyclette (100) selon la revendication précédente, comprenant deux ensembles (10) selon l'une quelconque des revendications 1 à 9, les deux ensembles (10) étant couplés l'un à l'autre et rotatifs l'un par rapport à l'autre, et un guidon (11) étant couplé à la partie allongée (6) de l'un des ensembles (10) qui consiste en un premier ensemble (10).

12. Bicyclette (100) selon la revendication précédente, comprenant en outre un siège (8), le siège (8) étant disposé dans la partie allongée (6) d'un deuxième ensemble (10) qui ne comprend pas ledit guidon (11).

13. Bicyclette (100) selon l'une quelconque des revendications 11 et 12, où l'ensemble (10) comprenant le guidon (11) consiste en une partie avant de la bicyclette (100) et l'ensemble (10) comprenant le siège (8) consiste en une partie arrière de la bicyclette (100), la partie avant de la bicyclette (100) consistant en un ensemble (10) selon l'une quelconque des revendications 1 à 8.

14. Bicyclette (100) selon l'une quelconque des revendications 12 et 13 et comprenant un ensemble (10) selon la revendication 4 et l'une quelconque des revendications 5 à 10, où le siège (8) comprend une partie de couplage allongée (9) et la partie noyau (13) présente une ouverture appropriée pour le couplage (12) à la partie de couplage allongée (9), la partie de couplage allongée (9) et l'ouverture de la partie noyau (13) étant telles que le siège (8) peut être fixé à des distances différentes de la partie allongée (6).
